(19)

Europäisches Patentamt

European Patent Office

Office européen des brevets

(11) **EP 4 546 263 A1**

(12) **EUROPEAN PATENT APPLICATION**

(43) Date of publication:
    **30.04.2025 Bulletin 2025/18**

(21) Application number: **24174045.5**

(22) Date of filing: **03.05.2024**

(51) International Patent Classification (IPC):
    **G06T 7/246** (2017.01)

(52) Cooperative Patent Classification (CPC):
    **G06T 7/246;** G06T 2207/30232; G06T 2207/30236;
    G06T 2207/30261; G06V 20/625

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(30) Priority: **27.10.2023 CN 202311412481**

(71) Applicant: **Getac Technology Corporation
    New Taipei City 221009 (TW)**

(72) Inventors:
    • **TSAI, Chih-Hao
      11568 Taipei City (TW)**
    • **CHENG, Ming-Che
      11568 Taipei City (TW)**

(74) Representative: **Viering, Jentschura & Partner
    mbB
    Patent- und Rechtsanwälte
    Am Brauhaus 8
    01099 Dresden (DE)**

(54) **METHOD FOR TRACKING OBJECT IN DYNAMIC SCENE AND SYSTEM THEREOF**

(57) A method for tracking an object in a dynamic scene and a system thereof are provided. The object-tracking system acquires continuous frames (21, 22) and identifies one or more objects in each of the frames (21, 22). A target object is chosen from a first frame (21). An object distance (d1, d2, d3) between the target object and each of the objects identified in a second frame (22) is calculated. Word strings on the target object and every object identified in the second frame (22) are recognized.

A string similarity between the string on the target object and the string on each of the objects in the second frame (22) is calculated. An overall score of the object distance (d1, d2, d3) and the string similarity is calculated and is referred to for determining if the target object is present in the second frame (22). Object-tracking is implemented when the target object is determined to be present in the second frame (22) and subsequent frames.

FIG. 2

**Description**

## FIELD OF THE DISCLOSURE

The present invention relates to an object-tracking method, and more particularly to a method for tracking an object in a dynamic scene according to an object distance and a string similarity between a previous frame and a next frame, and a system for performing the same.

## BACKGROUND OF THE DISCLOSURE

Currently, a multi-object tracking algorithm performed on continuous images is used to determine whether or not the objects in different frames (e.g., a previous frame and a next frame) are a same object, or any new object is found in the following frames. The algorithm is used to calculate a matching degree between the objects respectively present in the previous frame and in the next frame. The objects present in different frames are determined to be the same object and can be assigned with a same object number if the matching degree between the objects in the different frames is high enough. Otherwise, the object present in the next frame is determined to be a new object and is assigned with a new object number if the matching degree between the objects in the different frames is lower than a threshold.

The conventional methods for calculating the matching degree for objects are such as an intersection over union (IoU) method (e.g., Sort algorithm) that calculates a matching degree according to an overlapping proportion between two objects respectively in a previous frame and in a next frame, and an appearance metric method (e.g., DeepSort algorithm) that calculates an appearance degree between two objects.

However, the above-mentioned conventional methods may encounter some problems if the methods are applied to for recognizing a license plate in a dynamic scene. One of the problems is that, since a relative speed of an oncoming car compared to a camera device used to calculate the matching degree is high, a moving distance of the license plate of the same car in the two adjacent frames is large and the images of the license plate of the same car in the two adjacent frames are not overlapped. Therefore, it is difficult to determine whether or not the same object appears in both the previous and next frames based on an overlapping level. The other problem is that the license plates generally have a light background with dark characters in appearance and have similar outlines and aspect ratios, and the difference of characters of the license plates is insufficient to be the appearance features for distinguishing the difference license plates. Accordingly, the appearance feature of the license plate cannot be a reference alone to determine whether or not two license plates are the same license plate. One further problem is that, in a circumstance that dense cars are parked on the roadside or a coming car on an opposite lane of highway can be seen, it often happens that many license plates may appear at the same position in multiple continuous images within a short period of time. Therefore, even though the objects appear at the same position of multiple continuous frames, it still cannot determine that the objects are the same object.

For solving the above problems, an advanced license plate extraction process is required. However, if the device that is required to calculate the matching degree is with an embedded system, the device cannot provide sufficient computing power to extract features of each of the license plates from every frame.

## SUMMARY OF THE DISCLOSURE

In response to the above-referenced technical inadequacies that the license-plate recognition technology cannot only rely on the position of the license plate to determine if the same license plate appears in different frames, the present invention provides a method for tracking an object in a dynamic scene and a system. In the method, when taking the position of the license plate into consideration, it does not require that the license plates to be determined as the same license plate need to be overlapped in continuous frames in the dynamic scene, and the overlapped license plates in a previous frame and in a next frame will not be directly determined as the same license plate. The method can be applied to the dynamic scene, by which a relative distance between two objects (e.g., the license plates) in the previous frame and the next frame is obtained and assigned with a distance score. Further, a similarity between the two objects in the previous frame and the next frame is calculated. For license plate recognition, a string similarity between the strings of the license plates is calculated according to a result of license plate recognition and assigned with a similarity score. The system performs object recognition and tracking according to the distance score and the similarity score.

According to one embodiment of the object-tracking system of the present invention, the system includes a microcontroller, an image processor and a photographing module. The image processor is used to perform object recognition and object positioning, the photographing module is used to take a video and the microcontroller performs the object-tracking method.

In the method for tracking an object in a dynamic scene, a photographing module is used to take a video including continuous frames. A previous frame and a next frame are represented by a first frame and a second frame respectively. An image processor frame-by-frame recognizes one or more objects in the frames. One of the objects in the first frame is selected as a target object. Next, one or more distances between the target object of the first frame and one or more objects recognized from the second frame are calculated. The one or more distances are such as one or more object distances. After the strings of the target object of the first frame and the one or more objects of the second frame are recognized. A string similarity between the string of the target object of the first frame and each of the one or more objects of the second frame is calculated.

In the method, an object distance between the target object of the first frame and each of the objects of the second frame and a string similarity are referred to for calculating an overall score. The object-tracking system relies on the overall score to determine whether or not the target object in the first frame is any object appearing in the second frame.

Preferably, the object distance is a distance between a geometric center of the target object in the first frame and the geometric center of each of the one or more objects in the second frame.

Preferably, both string of the target object of the first frame and string of each of the objects of the second frame are license-plate numbers, each of which is a combination of multiple English alphabets and/or numbers; and the string similarity between the strings of two objects is an edit distance.

Further, when the overall score between the target object of the first frame and each of the objects of the second frame is obtained, the overall score is compared with a score threshold so as to determine whether or not the target object of the first frame appears as any object in the second frame according to a comparison result.

Accordingly, when it is determined that the target object appears in multiple continuous frames based on the overall score, a unique identifier is assigned to the target object in the continuous frames for tracking the target object.

These and other aspects of the present invention will become apparent from the following description of the embodiment taken in conjunction with the following drawings and their captions, although variations and modifications therein may be affected without departing from the spirit and scope of the novel concepts of the invention.

## BRIEF DESCRIPTION OF THE DRAWINGS

The described embodiments may be better understood by reference to the following description and the accompanying drawings, in which:

Fig. 1A and Fig. 1B are schematic diagrams depicting circumstances that a method for tracking object in dynamic scene is performed;

Fig. 2 is a schematic diagram illustrating a relationship of license plates in a previous frame and in a next frame in the method for tracking object in dynamic scene;

Fig. 3 is a schematic diagram illustrating main function modules of a dynamic scene object-tracking system according to one embodiment of the present invention;

Fig. 4 is a flowchart illustrating the method for tracking object in dynamic scene according to one embodiment of the present invention;

Fig. 5 is a flowchart illustrating a process of tracking a license plate according to one embodiment of the present invention;

Fig. 6 is a schematic diagram illustrating a process of determining the same license plate in continuous frames according to one embodiment of the present invention;

Fig. 7 is a flowchart illustrating a process of determining the same license plate in continuous frames in the method for tracking object in dynamic scene according to one embodiment of the present invention; and

Fig. 8 is a flowchart illustrating a process of recognizing characters of string of license plate in one embodiment of the present invention.

## DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

In response to the technical inadequacies that the conventional license-plate recognition algorithm is not suitably to be applied to a scene that is dynamically changed for tracking a specific object, the present invention provides a method for tracking object in dynamic scene and a system. The method neither requires that the license plates in continuous frame should be overlapped, nor relies on the overlapped license plates in a previous frame and in a next frame to determine the same license plate. Instead, the method obtains a relative distance of two objects (e.g., the license plates) respectively in the previous frame and in the next frame, and assigns the distance a distance score. On the other hand, a similarity between every two objects respectively in the previous frame and in the next frame is calculated. For example, the similarity between two objects can be a string similarity between two license plates. A string similarity between the two license plates respectively in the previous frame and in the next frame is then calculated and is assigned with a similarity score. The further object recognition and tracking can be performed according to the distance score and the similarity score.

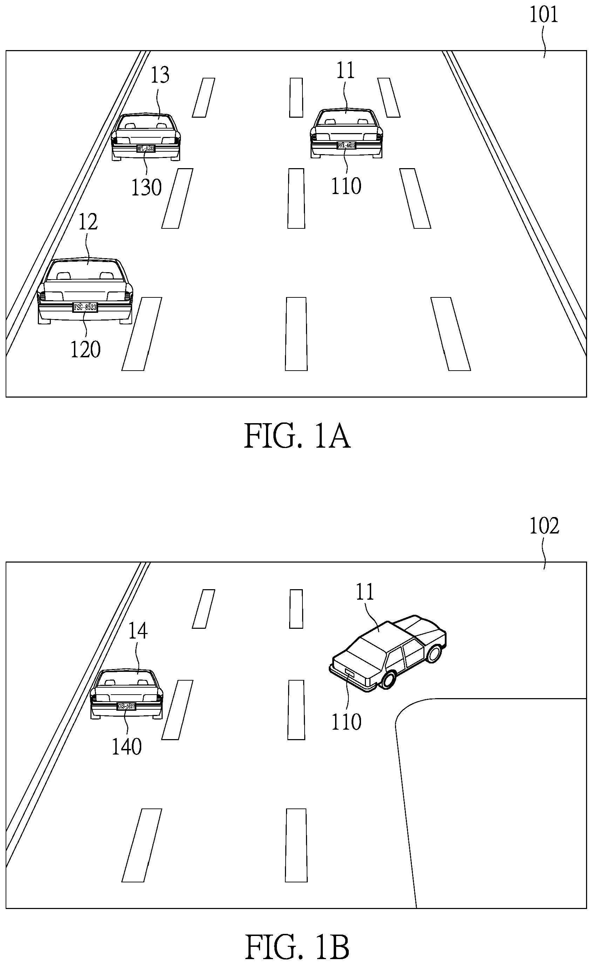

References are made to Fig. 1A and Fig. 1B, which are schematic diagrams illustrating the scenes where the method for tracking object in dynamic scene is performed in one embodiment of the present invention.

Fig. 1A shows a first frame 101 selected from continuous frames captured by a photographing module of a terminal device (e.g., a drive recorder). The first frame 101 shows vehicles 11, 12 and 13 in front of a rear vehicle having the terminal device. An object-detection model operated in the terminal device can be used to identify a license plate 110 of the vehicle 11, a license plate 120 of the vehicle 12 and a license plate 130 of the vehicle 13 from the first frame 101. The vehicle 11 is selected as a target vehicle and the license plate 110 of the vehicle 11 is selected as a target license plate.

Fig. 1B shows a second frame 102 selected from the continuous frames. The second frame 102 still has the target vehicle 11 and the image of the license plate 110 is still taken. In an edge-computing method for automatic license plate recognition, a license plate recognition technology is applied to the continuous frames for tracking the vehicle 11 having the license plate 110. In the present example, according to a result of license plate recognition, the second frame 102 still shows the vehicle 11, but does not include the vehicles 12 and 13 that are parking on a roadside. Another vehicle 14 having a license plate 140 parking on the roadside is found in the second frame 102.

The system uses the photographing module to take the continuous frames and tracks the license plate that appears in the continuous frames. The photographing module can be the drive recorder installed inside a moving vehicle. The object-tracking system of the present invention is suitably used in an electronic device installed in the moving vehicle. Therefore, a purpose of tracking object in a dynamic scene can be achieved.

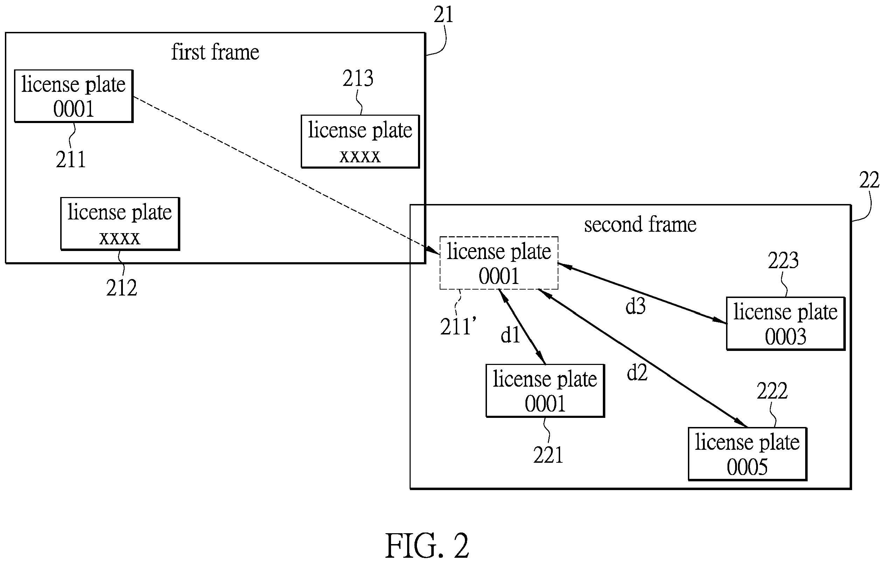

Reference is made to Fig. 2, which is a schematic diagram depicting a relationship of two license plates respectively appearing in a previous frame and in a next frame in the method for tracking object in dynamic scene.

Fig. 2 shows a first frame 21 selected from the continuous frames. Several license plates 211, 212 and 213 are recognized from the first frame 21. In the method for tracking object, the license plate 211 with a license plate number "0001" is selected as a target license plate.

The object-tracking system extracts another frame (e.g., the second frame 22) from the continuous frames. Multiple license plates 221, 222 and 223 are recognized from the second frame 22 by an object recognition process. In the object-tracking method, distances between the target license plate 211 of the first frame 21 and each of the license plates of the second frame 22 can be calculated. The present example shows that the position of the target license plate 211 in the first frame 21 corresponds to the position of the target license plate 211' with a license plate number "0001" of the second frame 22. Since the scene is dynamically changed, the position of the target license plate 211 can be changed to be the position of one of the license plates 221, 222 and 223 of the second frame 22.

For determining whether or not the target license plate 211 of the first frame 21 is any license plate of the second frame 22, multiple distances between the target license plate 211 and each of the license plates 221, 222 and 223 recognized from the second frame 22 can be calculated. Based on the target license plate 211' that corresponds to the position of the target license plate 211 of the first frame 21 labeled in second frame 22, a first object distance d1 between the target license plate 211' and the license plate 221, a second object distance d2 between the target license plate 211' and the license plate 222, and a third object distance d3 between the target license plate 211' and the license plate 223 are calculated. The distance to be calculated can be a straight-line distance between two objects in the image, and the object distance is a distance between a geometric center of the target object in the first frame and the geometric center of each of the one or more objects in the second frame.

After one or more object distances between the selected target license plate 211 and the one or more license plates recognized from another frame (e.g., a next frame or any frame before or after the current frame) is obtained, the one or more object distances acts as one of basis for determining whether or not the target license plate 211 appears in another frame. The present example shown in Fig. 2 shows that, in the continuous frames taken in a rapidly changing scene, the target license plate 211 with a license plate number "0001" being selected from the first frame 21 becomes the license plate 221 shown in the second frame 22. The license plate 221 has been recognized as the license plate with the license plate number "0001." That means the target license plate 211 has been recognized and tracked in the continuous frames. According to the certain embodiments of the present invention, the object-tracking system can conduct recognition and tracking on multiple target license plates simultaneously.

It should be noted that, for the purpose of object tracking, in addition to calculating the object distance between the target object (e.g., the target license plate) and one or more objects in another frame for recognizing the same object in a dynamic scene, a similarity (e.g., a string similarity) of features between the target object and the object in a different frame is also taken into consideration for recognizing the same object.

Taking the license plate as a main embodiment, it cannot only rely on appearance of license plate to determine whether or not the objects in a previous frame and in a next frame are the same object since the appearances of general license plates are similar. Therefore, similarity of features of the objects (e.g., license plates) is taken into consideration. For example, the similarity is such as a string similarity since a string of a general license plate is a license plate number that is a combination of multiple English alphabets and/or numbers. The system will consider the string similarity between string of the target object of the first frame and string of each of the objects of the second frame as a reference to determine if the object appears in the adjacent frames. In an exemplary example, a Levenshtein distance that is a kind of edit distance is used to calculate a minimum number of single-character edits between two strings when one of the strings is converted to another string. The minimum number of single-character edits can be construed as the edit distance between two strings. The object-tracking method of the present invention is performed based on the string similarity of the license plates respectively in the previous frame and in the next frame. After the string similarity is calculated, the two strings are identical if the edit distance is "0" or the two strings are different if the edit distance is "1." The edit distance acts as the string similarity and is represented between "0" and "1" since the minimum number of single-character edits is calculated and normalized. The string similarity can effectively exclude the problems that the license plate may not be recognized accurately due to lights, shadows and various factors.

Calculation of the Levenshtein distance ($\text{lev}_{a,b}(i,j)$) refers to equation 1. In equation 1, "|a|" and "|b|" represent lengths of the strings "a" and "b." The Levenshtein distance between these two strings is "$\text{lev}_{a,b}(|a|,|b|)$" that can be obtained by equation 1. "$\text{lev}_{a,b}(i,j)$" denotes the Levenshtein distance between first "i" characters of "a" and first "j" characters of "b."

Equation 1:

$$
\text{lev}_{a,b}(i,j) = \begin{cases} \max(i,j) & if \ \min(i,j) = 0, \\ \min \begin{cases} lev_{a,b}(i-1,j) + 1 \\ lev_{a,b}(i,j-1) + 1 \\ lev_{a,b}(i-1,j-1) + 1_{(a_i \neq b_j)} \end{cases} & otherwise. \end{cases}
$$

In the method for tracking object in dynamic scene, both calculation results of the object distance and the edit distance (i.e., the string similarity) are taken into consideration. According to an actual condition of the dynamic scene, for example, a moving vehicle mounting an electronic device operating the object-tracking system, a specific ratio (e.g., 4:6 or any ratio including 1:1) can be applied to between the object distance and the edit distance for calculating an overall score that is used to determine whether or not the objects respectively in the previous frame and in the next frame are the same object. The overall score is then compared with a determination threshold set by the object-tracking system so as to confirm the same object in the continuous frames. The objects determined to be the same object are assigned with an object identifier (e.g., a number).

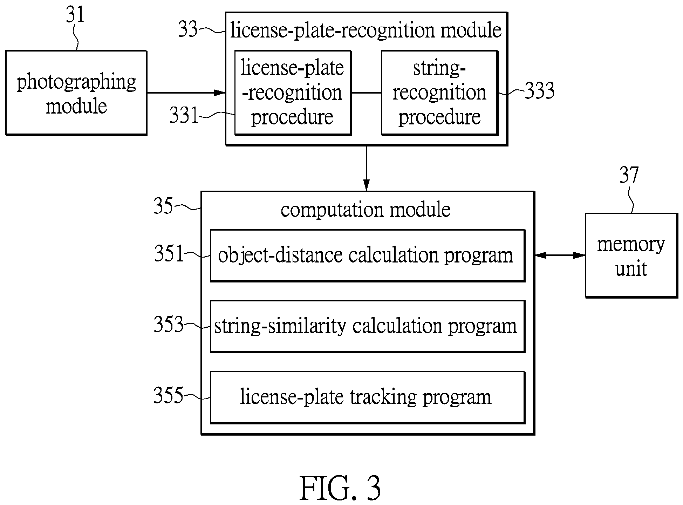

Reference is made to Fig. 3, which is a schematic diagram illustrating main function modules of the object-tracking system in a dynamic scene according to one embodiment of the present invention. The various function modules that are implemented through collaboration of software and hardware circuits perform object tracking based on the object distance and the edit distance. In one of the embodiments, the main function modules of the object-tracking system include a photographing module 31, a license-plate-recognition module 33, a computation module 35 and a memory unit 37 that is used to buffer the processed data (e.g., data of the continuous frames and license plates) and the values (e.g., the object distances, edit distances and overall scores) generated by various calculations.

According to one embodiment of the present invention, the license-plate-recognition module 33 is implemented by an image processor of the electronic device. The license-plate-recognition module 33 performs object recognition and object positioning through collaboration of firmware, software and/or hardware. In one embodiment, the license-plate-recognition module 33 performs a license-plate-recognition procedure 331 and a string-recognition procedure 333. The computation module 35 can be implemented by a microcontroller of the electronic device. The computation module 35 primarily performs an object-distance calculation program 351, a string-similarity calculation program 353 and a license-plate tracking program 355.

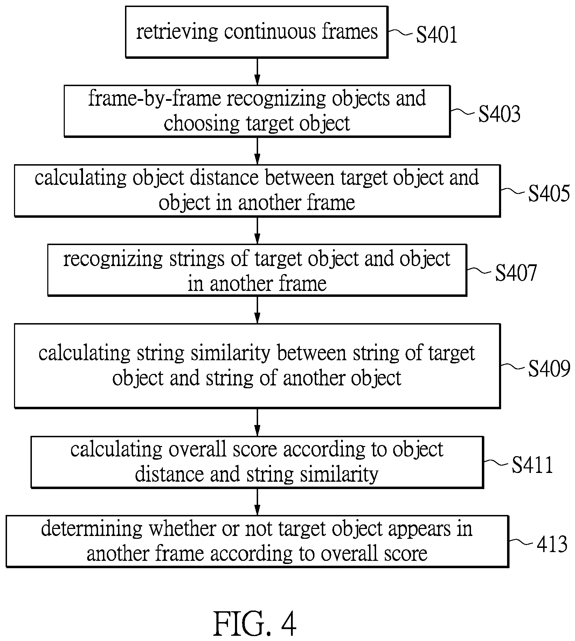

According to the embodiment of the function modules of the object-tracking system shown in Fig. 3, an operating procedure of the system can refer to Fig. 2, which is a schematic diagram depicting a relationship between license plates respectively in the previous frame and in the next frame and Fig. 4, which is a flowchart illustrating the method for tracking object in dynamic scene according to one embodiment of the present invention.

In the flowchart of the method for tracking object in dynamic scene, the photographing module 31 of the object-tracking system is used to take a video and extract continuous frames (step S401). The license-plate-recognition module 33 performs the license-plate-recognition procedure 331 for frame-by-frame recognizing one or more license plates in each of the frames (step S403). For example, the first frame 21 of Fig. 2 includes a target license plate 211 and other license plates 212 and 213, and the second frame 22 includes license plates 221, 222 and 223. It should be noted that the first frame 21 having the target license plate 211 is a currently-received image and the second frame 22 indicates any of other frames in the continuous frames. In other words, the second frame 22 can be any frame before or after the first frame 21.

In the schematic diagram shown in Fig. 2, after a target object (e.g., the target license plate 211) is selected, the computation module 35 that is implemented by a central processor and related circuits of the object-tracking system performs the object-distance calculation program 351 for calculating one or more object distances between the position of the target license plate 211 of the first frame 21 and one or more objects (e.g., the license plates 221, 222 and 223) of the second frame 22 (step S405).

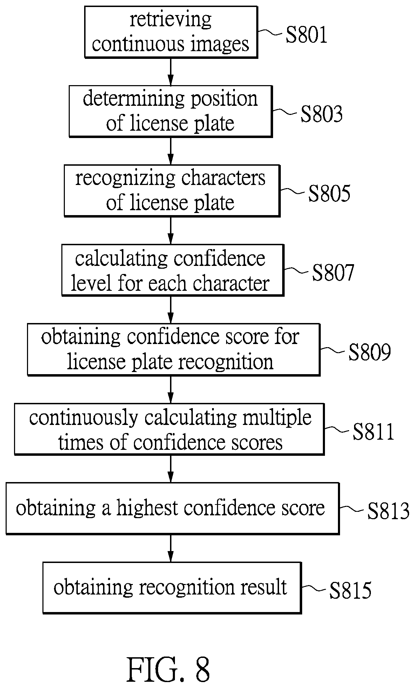

Afterwards, the string-recognition procedure 333 operated in the license-plate-recognition module 33 is used to recognize strings of the target object of the first frame (e.g., target license plate of the first frame 21 of Fig. 2) and one or more objects of the second frame (e.g., license plates 221, 222 and 223 of the second frame 22 of Fig. 2) (step S407). The technology for recognizing characters of the string of the license plate can refer to the flowchart of recognizing string of the license plate in Fig. 8.

The computation module 35 performs the string-similarity calculation program 353 so as to calculate a string similarity between two objects. The string similarity can be embodied by the Levenshtein distance. Calculation of the edit distance is to obtain the string similarity between the strings of the target object of the first frame and each of the objects of the second frame, namely the string similarity between two license plates (step S409).

After the object distance between the target object of the first frame and each of the one or more objects of the second frame and the string similarity between every two objects are obtained, a distance score is assigned to the object distance and a string-similarity score is assigned to the string similarity, an overall score can be calculated based on the distance score and the string-similarity score (step S411). In an aspect, an average of the distance score and the string-similarity score can be the overall score. In another aspect, a ratio between the distance score and the string-similarity score can be set when taking an actual dynamic scene into consideration, and the ratio referred to for calculating the overall score.

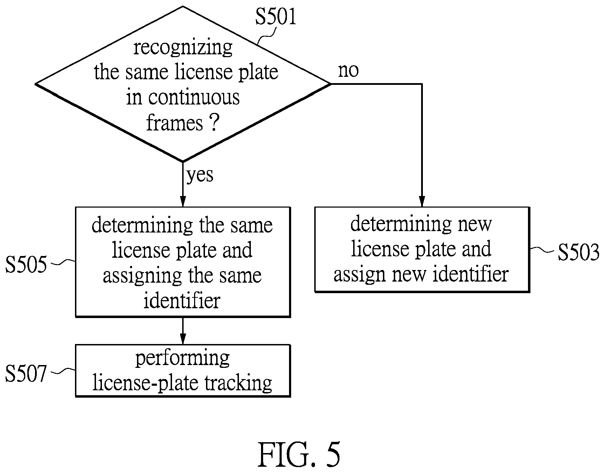

A comparison result of comparing the overall score and a score threshold set by the system is used to determine whether or not the target object in the first frame is any object appearing in the second frame. For example, the object having the overall score larger than or equal to the score threshold in the second frame is regarded as the target object in the first frame and the objects are assigned with the same identifier (e.g., a number) (step S413). After the same objects are determined in the continuous frames, the license-plate tracking program 355 performed by the computation module 35 can track the license plate. Reference is made to Fig. 5, which is a flowchart illustrating a process of tracking a license plate according to one embodiment of the present invention.

When the license plates in each of the frames are recognized, the license plates are one-by-one numbered. The overall score being obtained according to the distance score and the string-similarity score between every two license plates in different frames is referred to for determining whether or not the same license plate appears in the continuous frames (step S501). If the overall score is smaller than a score threshold set by the system, the license plates in the continuous frames are determined to be different license plates (determination is "no"). That is determined that a license plate of a new vehicle appears, and the system assigns a new identifier to the new license plate (step S503).

Otherwise, if the overall score is larger than the score threshold, it is determined that the target license plate of the first frame appears in other frames (determination is "yes"), and the same identifier that can be newly-added or modified is assigned to the target license plate in the continuous frames based on the overall score (step S505). The license plate can be tracked according to the same identifier in the continuous frames (step S507).

A unique identifier can be assigned to the same license plate found in the continuous frames, and the unique identifier assigned to the license plate can be marked on the picture displayed on a display of the electronic device. The license plate numbers that have been recognized can also be marked on the picture for a user to monitor the image of the vehicle or the license plate that is recognized from the continuous frames. The identifier or the license plate number displayed on the display of the electronic device is provided for easily tracking the vehicle.

In addition to the above description, here are some scenarios that the above-described method will encounter. In one of the scenarios, when the overall scores between the target license plate of the first frame and all license plates of the second frame are obtained, if the overall scores between multiple license plates of the second frame or other frames and the target license plate of the first frame are larger than or equal to the score threshold, the license plate having the highest overall score can be regarded as the same with target license plate of the first frame, and is assigned with the same identifier (e.g., a number) with the target license plate.

However, in one further scenario, when both the first frame and the second frame have multiple license plates, there will be an exception if only the license plate having the highest overall score is determined as the same license plate with the target license plate. The method for recognizing the characters of the string of the license plate of the present invention is described as follows.

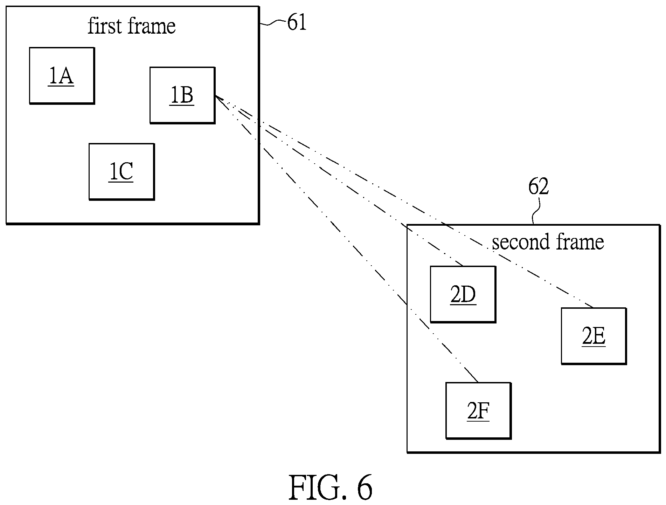

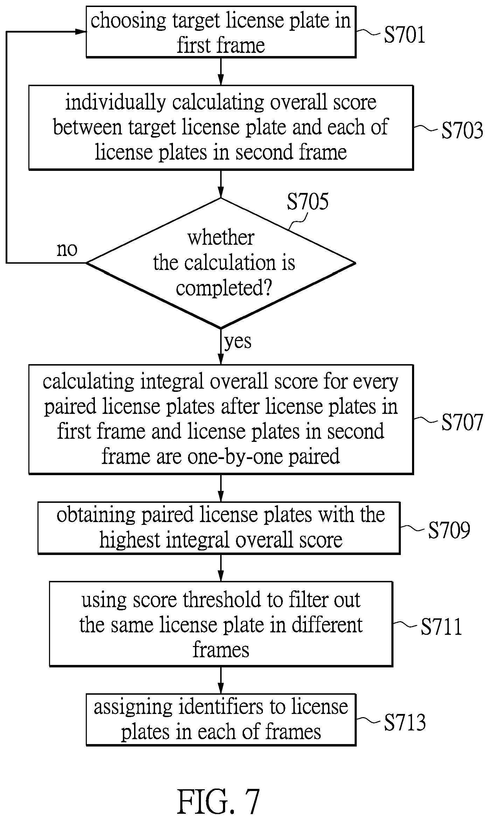

Reference is made to Fig. 6, which is a schematic diagram showing multiple objects (e.g., multiple license plates) to be recognized respectively from a first frame 61 and a second frame 62 of the continuous frames according to one embodiment of the present invention. The method for tracking object in dynamic scene is used to determine the same license plate from the continuous frames so as to track the license plate. Fig. 7 is a flowchart illustrating the method for tracking object in dynamic scene according to one embodiment of the present invention.

Fig. 6 schematically shows three license plates 1A, 1B and 1C and three license plates 2D, 2E and 2F respectively recognized from the first frame 61 and the second frame 62 by a license plate recognition technology. Next, object distances (i.e., the distance between two license plates) and the string similarities between the objects in the different frames are calculated, and overall scores are also calculated based on the object distances and the string similarities. The overall scores are used to determine the same license plate in different frames.

In the beginning of Fig. 7, one of the license plates of the first frame is selected as a target license plate (step S701). Referring to the flowchart shown in Fig. 4, the object distances and the string similarities between the target license plate of the first frame and all of the license plates of the second frame are calculated. An overall score can also be calculated based on the object distance and the string similarity between the target license plate and each of the license plates of the second frame (step S703). After that, it is determined whether or not the calculations are completed (step S705). The steps S701 to S703 are repeated if the calculation of the object distance or the string similarity of any license plate is not completed until the overall scores of all of the license plates are calculated.

Table 1 is an exemplary example showing the overall scores among all of the license plates. For example, the overall scores between the license plate 1A of the first frame and the license plates 2D, 2E and 2F of the second frame are 100, 90 and 10 respectively. The overall scores between the license plate 1B of the first frame and the license plates 2D, 2E and 2F of the second frame are 95, 60 and 15 respectively. The overall scores between the license plate 1C of the first frame and the license plates 2D, 2E and 2F are 20, 35 and 25 respectively.

Table 1:

| Second frame / first frame | license plate 2D | license plate 2E | license plate 2F |
|---|---|---|---|
| license plate 1A | 100 | 90 | 10 |
| license plate 1B | 95 | 60 | 15 |

| | | | |
|---|---|---|---|
| license plate 1C | 20 | 35 | 25 |

After calculations of the overall scores between the pluralities of license plates in the different frames are completed, an integral overall score for every paired license plates is calculated after the license plates in the first frame and the license plates in the second frame are one-by-one paired (step S707). That is, in the process of the present invention, not only the license plate having the highest overall score is relied on to determine the same license plate in different frames, but an integral overall score to be calculated by one-by-one pairing the license plates in different frames is taken into consideration for determining the same license plate in the different frames. For example, an overall score between a license plate 1A of the first frame and a license plate 2D of the second frame is 100, an overall score between a license plate 1B of the first frame and a license plate 2E of the second frame is 60, and an overall score between a license plate 1C of the first frame and a license plate 2F of the second frame is 25. An integral overall score of the above pairing license plates in the different frames is 185 by adding 100, 60 and 25. However, the pairing of the license plates may not be the best if the integral overall score of the pairing is not the highest score.

Thus, the integral overall scores are calculated for all paired license plates acquired respectively from the first frame and the second frame. Therefore, multiple integral overall scores are obtained. The paired license plates with the highest integral overall score are determined as a final decision of paired license plates (i.e., the object-pairing result) (step S709). Next, a score threshold is introduced for filtering out the same license plate in different frames (step S711). For example, the score threshold is set as 50. According to the final decision of paired license plates, the license plates in the different frames are determined as different license plates if the overall score thereof is lower than 50. The license plates in the different frames are assigned with identifiers according to the license-plate pairing result (step S713), in which the same license plates in the different frames are assigned with the same identifier; a new license plate is determined and assigned with a new identifier if the license plates appearing in the different fames are determined as different license plates.

One of the methods for recognizing characters of the string of the license plate can refer to Fig. 8, which is a flowchart illustrating a process of recognizing characters of the string of the license plate according to one embodiment of the present invention.

According to one of the embodiments of the present invention, the object-tracking system can be installed in an electronic device such as a drive recorder. The electronic device can take a video consisting of continuous frames by a photographing module (e.g., the photographing module 31 of Fig. 3) (step S801) and use a license-plate-recognition module (e.g., the license-plate-recognition module 33 of Fig. 3) that is implemented through collaboration of software and hardware to recognize the positions of one or more in the frames (step S803). In an aspect, an intelligent method can be used to identify the object that is in compliance with the features of a license plate. For example, the intelligent method is able to recognize a boundary of a license plate of each of the vehicles in the frames so as to retrieve an image of the license plate. After that, a string-detection technology (e.g., the string-recognition procedure 333 of Fig. 3) is used to recognize the characters of the string of each of the license plates (step S805).

According to one embodiment of recognizing the characters of the license plate of the present invention, the computation module of the object-tracking system performs a confidence-level algorithm on the characters that are frame-by-frame recognized of the string of the license plate so as to calculate a confidence level for each of the characters (step S807). The confidence level for each of the characters relates to a possibility of each of the characters of the license plate being a specific letter or a number. The intelligent model can be a character-recognition model used to recognize the letters and number that compose a license plate number of the license plate. The intelligent model is used for recognizing the characters of the license plate. The system sets a possibility threshold or a confidence level threshold that is referred to for obtaining a recognition result of characters if the recognition result has a maximum possibility among the possibilities greater than the possibility threshold.

Next, when the confidence levels of all or a certain number of the recognizable characters of the license plates have been calculated, a confidence score of all of the characters of each of the license plates can be frame-by-frame calculated based on the confidence levels of the characters of the license plates (step S809). The confidence score of each of the license plates is a statistical value of the confidence levels of multiple characters of each of the license plates. For example, the confidence score can be, but not limited to, an average, a sum or an overall score with weight setting of the confidence levels of all of the characters of the license plate. It should be noted that the weight setting for calculating the overall score gives a higher weight for the character with a higher confidence level.

The processes described in step S807 and step S809 can be used to calculate the confidence score of each of the license plates in the continuous frames. When multiple times of confidence scores are calculated within a period of time (step S811), a highest confidence score can be obtained by continuously calculating multiple confidence scores within the period of time (step S813). Alternatively, multiple confidence scores of multiple license plates extracted from the continuous frames can be calculated at intervals, a frame image having the license plate with the highest confidence score can be obtained before the license plate disappears. In the meantime, when the same license plate appears in multiple continuous frames, the confidence score of each of the multiple continuous frames is calculated, and the frame with the highest confidence score can be obtained. The recognition result of the license plate in the frame with the highest confidence score is regarded as the recognition result of the system (step S815). Recognition of string of the license plate has been completed.

In conclusion, according to the above embodiments relating to the method for tracking object in dynamic scene and the system, one of the objectives of the method is to able to conduct object-tracking in various circumstances, especially the dynamic scene. Especially, the object distance and the string similarity between every two objects in different frames of the continuous frames are taken into consideration for calculating an overall score for determining the same object in the continuous frames. The overall score is referred to for conducting object tracking. Therefore, the method has solved the problem that the conventional technology cannot effectively track the license plate in the dynamic scene.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A method for tracking an object in a dynamic scene, **characterized by** comprising:

   capturing a video and obtaining continuous frames (21, 22);
   frame-by-frame recognizing one or more objects in each of the frames (21, 22) and choosing a target object in a first frame (21) of the frames;
   individually calculating one or more distances between the target object in the first frame (21) and one or more objects recognized in a second frame (22) of the frames so as to obtain one or more object distances (d1, d2, d3);
   recognizing strings of the target object in the first frame (21) and the one or more objects recorgnized in the second frame (22);
   calculating a string similarity between the string of the target object in the first frame (21) and the string of each of the one or more objects recognized in the second frame (22);
   calculating an overall score according to the object distance (d1, d2, d3) and the string similarity between the target object in the first frame (21) and each of the one or more objects recognized in the second frame (22); and
   determining whether or not the target object in the first frame (21) is any object appearing in the second frame (22) according to the overall score.

2. The method according to claim 1, wherein the object distance (d1, d2, d3) is a distance between a geometric center of the target object in the first frame (21) and the geometric center of each of the one or more objects recognized in the second frame (22).

3. The method according to claim 2, wherein the string of the target object in the first frame (21) and the string of each of the one or more objects recognized in the second frame (22) are license-plate numbers, each of which is a combination of at least one of multiple English alphabets or multiple numbers; and the string similarity between the strings of two objects is an edit distance that is a Levenshtein distance that is a minimum number of single-character edits that is necessary to convert one string into another string between the strings of two objects.

4. The method according to claim 1, wherein the one or more objects to be frame-by-frame recognized are one or more license plates and the one or more license plates are one-by-one numbered.

5. The method according to claim 1, wherein, when the overall score between the target object in the first frame (21) and each of the one or more objects recognized in the second frame (22) is obtained, the overall score is compared with a score threshold so as to determine whether or not the target object in the first frame (21) appears as any object of the one or more objects recognized in the second frame (22) according to a comparison result.

6. The method according to claim 5, wherein, when it is determined that the target object appears in multiple continuous frames (21, 22) of the frames based on the overall score, a unique identifier is assigned to the target object in the continuous frames (21, 22) for tracking the target object.

7. The method according to claim 5, wherein, the object distance (d1, d2, d3) between the target object in the first frame (21) and each of the one or more objects recognized in the second frame (22) is assigned with a distance score, the string similarity between the string of the target object in the first frame (21) and the string of each of the one or more objects in the second frame (22) is assigned with a string-similarity score, and the distance score and the string-similarity score are used to calculate the overall score.

8. The method according to claim 7, wherein an object having the overall score larger than or equal to the score threshold is regarded as the target object in the first frame (21) and assigned with a same identifier with the target object.

9. The method according to claim 7, wherein, where both the first frame (21) and the second frame (22) include multiple objects, the multiple objects of the first frame (21) are one-by-one selected as the target object, the overall score between every target object selected from the first frame (21) and each of multiple the objects recognized in the second frame (22) is calculated; afterwards, multiple integral overall scores are obtained by summing up the overall scores to be calculated by one-by-one pairing the multiple objects of the first frame (21) and the multiple objects of the second frame (22), and the paired objects having a highest integral overall score are determined to be a same object in different frames (21, 22) by comparing with the score threshold; and the objects in different frames (21, 22) regarded as the same object are assigned with a same identifier.

10. An object-tracking system in a dynamic scene, operated in an electronic device, **characterized by** comprising:

a microcontroller;
an image processor, electrically connected with the microcontroller, used to perform object recognition and object positioning;
a photographing module (31), electrically connected with the image processor, used to capture a video;
wherein the microcontroller performs an object-tracking method comprising:

using the photographing module (31) to capture the video and extracting continuous frames (21, 22) including a first frame (21) and a second frame (22);
using the image processor to frame-by-frame recognize one or more objects in the continuous frames (21, 22) and choosing a target object in the first frame (21);
calculating a distance between the target object in the first frame (21) and each of one or more objects recognized in the second frame (22) so as to obtain one or more object distances (d1, d2, d3);
recognizing strings of the target object in the first frame (21) and the one or more objects recognized in the second frame (22);
calculating a string similarity between the string of the target object in the first frame (21) and the string of each of the one or more objects recognized in the second frame (22);
calculating an overall score according to the object distance (d1, d2, d3) and the string similarity between the target object in the first frame (21) and each of the one or more objects recognized in the second frame (22); and
determining whether or not the target object in the first frame (21) is any object appearing in the second frame (22) according to the overall score.

11. The object-tracking system according to claim 10, wherein the object distance (d1, d2, d3) is a distance between a geometric center of the target object in the first frame (21) and the geometric center of each of the one or more objects recognized in the second frame (22).

12. The object-tracking system according to claim 10, wherein the string of the target object in the first frame (21) and the string of each of the one or more objects recognized in the second frame (22) are license-plate numbers, each of which is a combination of at least one of multiple English alphabetic letters or multiple numbers; and the string similarity between the strings of two objects is an edit distance.

13. The object-tracking system according to claim 10, wherein the one or more objects to be frame-by-frame recognized are one or more license plates, the one or more license plates are one-by-one numbered, and a license plate number of the one or more license plates is frame-by-frame recognized and displayed on a display of the electronic device.

14. The object-tracking system according to claim 10, wherein, in the object-tracking method, when the overall score between the target object in the first frame (21) and each of the one or more objects recognized in the second frame (22) is obtained, the overall score is compared with a score threshold so as to determine whether or not the target object in the first frame (21) appears as any object of the one or more objects recognized in the second frame (22) according to a comparison result; wherein, when it is determined that the target object appears in multiple continuous frames (21, 22) based on the overall score, a unique identifier is assigned to the target object in the continuous frames (21, 22) for tracking the target object.

15. The object-tracking system according to claim 14, wherein the object distance (d1, d2, d3) between the target object in the first frame (21) and each of the one or more objects recognized in the second frame (22) is assigned with a distance score, the string similarity between the string of the target object in the first frame (21) and the string of each of the one or more objects in the second frame (22) is assigned with a string-similarity score, and the distance score and the string-similarity score are used to calculate the overall score; the object having the overall score larger than or equal to the score threshold is regarded as the target object in the first frame (21) and assigned with a same identifier with the target object; wherein:

where both the first frame (21) and the second frame (22) include multiple objects, the multiple objects of the first frame (21) are one-by-one selected as the target object, the overall score between every target object selected from the first frame (21) and each of the multiple objects recognized in the second frame (22) is calculated; afterwards, multiple integral overall scores are obtained by summing up the overall scores to be calculated by one-by-one pairing the multiple objects of the first frame (21) and the multiple objects of the second frame (22), and the paired objects having a highest integral overall score are determined to be a same object in different frames (21, 22) by comparing with the score threshold; and the objects in different frames (21, 22) regarded as the same object are assigned with a same identifier.

FIG. 1A

FIG. 1B

FIG. 2

EP 4 546 263 A1

31

33 — license-plate-recognition module

photographing module

331 —

license-plate -recognition procedure

string- recognition procedure

— 333

35 — computation module

351 — object-distance calculation program

353 — string-similarity calculation program

355 — license-plate tracking program

37

memory unit

FIG. 3

retrieving continuous frames ~S401

frame-by-frame recognizing objects and choosing target object ~S403

calculating object distance between target object and object in another frame ~S405

recognizing strings of target object and object in another frame ~S407

calculating string similarity between string of target object and string of another object ~S409

calculating overall score according to object distance and string similarity ~S411

determining whether or not target object appears in another frame according to overall score ~413

FIG. 4

S501

recognizing
the same license plate
in continuous
frames ?

no

yes

determining the same
license plate and
assigning the same
identifier

S505

determining new
license plate and
assign new identifier

S503

performing
license-plate tracking

S507

FIG. 5

FIG. 6

choosing target license plate in first frame ~S701

individually calculating overall score between target license plate and each of license plates in second frame ~S703

S705

no — whether the calculation is completed?

yes

calculating integral overall score for every paired license plates after license plates in first frame and license plates in second frame are one-by-one paired ~S707

obtaining paired license plates with the highest integral overall score ~S709

using score threshold to filter out the same license plate in different frames ~S711

assigning identifiers to license plates in each of frames ~S713

FIG. 7

```
        ┌─────────────────┐
        │    retrieving   │──S801
        │ continuous images│
        └─────────────────┘
                 │
                 ▼
        ┌─────────────────┐
        │ determining position│──S803
        │  of license plate│
        └─────────────────┘
                 │
                 ▼
        ┌─────────────────┐
        │recognizing characters│──S805
        │  of license plate│
        └─────────────────┘
                 │
                 ▼
        ┌─────────────────┐
        │calculating confidence│──S807
        │level for each character│
        └─────────────────┘
                 │
                 ▼
        ┌──────────────────────┐
        │obtaining confidence score for│──S809
        │ license plate recognition│
        └──────────────────────┘
                 │
                 ▼
        ┌──────────────────────┐
        │continuously calculating multiple│──S811
        │  times of confidence scores│
        └──────────────────────┘
                 │
                 ▼
        ┌──────────────────────┐
        │obtaining a highest confidence score│──S813
        └──────────────────────┘
                 │
                 ▼
        ┌──────────────────────┐
        │ obtaining recognition result│──S815
        └──────────────────────┘
```

FIG. 8

**EUROPEAN SEARCH REPORT**

Application Number

EP 24 17 4045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICOLAS THOME ET AL: "A cognitive and video-based approach for multinational License Plate Recognition", MACHINE VISION AND APPLICATIONS, SPRINGER, BERLIN, DE, vol. 22, no. 2, 1 March 2010 (2010-03-01), pages 389-407, XP019880785, ISSN: 1432-1769, DOI: 10.1007/S00138-010-0246-3 | 1,3-10, 12-15 | INV. G06T7/246 |
| Y | * section 5.1, section 5.2.1; figure 2 * | 2,11 | |
| Y | CN 102 509 457 A (QINGDAO HISENSE TRANS TECH CO) 20 June 2012 (2012-06-20) * paragraph [0031] - paragraph [0048]; figure 1 * | 2,11 | |

TECHNICAL FIELDS SEARCHED (IPC)

G06T
G06V

The present search report has been drawn up for all claims

| Place of search | Date of completion of the search | Examiner |
|---|---|---|
| Munich | 10 October 2024 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 24 17 4045

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2024

| Patent document cited in search report | Publication date | Patent family member(s) | | Publication date |
|---|---|---|---|---|
| CN 102509457 A | 20-06-2012 | CN | 102509457 A | 20-06-2012 |
| | | WO | 2013053159 A1 | 18-04-2013 |

EPO FORM P0459

For more details about this annex : see Official Journal of the European Patent Office, No. 12/82